# EUROPÄISCHE PATENTSCHRIFT

(11) **EP 1 796 950 B1**
(45) Veröffentlichungstag und Bekanntmachung des Hinweises auf die Patenterteilung: **08.08.2012**
(21) Anmeldenummer: 05789583.1
(22) Anmeldetag: 19.08.2005
(51) Int. Cl.: B60W 50/08, B62D 15/02

(54) **VERFAHREN UND VORRICHTUNG ZUR FAHRERUNTERSTÜTZUNG**
METHOD AND DEVICE FOR DRIVER ASSISTANCE
PROCEDE ET DISPOSITIF D'ASSISTANCE AU CONDUCTEUR

(30) Priorität: 01.10.2004 DE 102004048010
(43) Veröffentlichungstag der Anmeldung: 20.06.2007
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2005/054108
(87) Internationale Veröffentlichungsnummer: WO 2006/037692

(56) Entgegenhaltungen:
- EP-A2- 1 531 113
- WO-A-03/094130
- WO-A1-03/076250
- WO-A1-03/091813
- WO-A1-03/105108
- WO-A1-2006/037445
- DE-A1- 10 210 130
- DE-A1- 10 238 324
- DE-A1- 19 507 956
- DE-A1-102004 048 047

## Beschreibung

### Stand der Technik

Die Erfindung betrifft ein Verfahren und eine Vorrichtung zur Fahrerunterstützung.

Derartige Verfahren bzw. Vorrichtungen, sogenannte Fahrerassistenzsysteme, sind in verschiedenen Ausprägungen beschrieben. Ein Beispiel für ein solches Fahrerassistenzsystem ist ein Spurverlassenswarner (Lane-Departure-Waming), welcher den Fahrer bei Verlassen der Fahrspur oder bei drohendem Verlassen warnt. Ein Beispiel für einen solchen Spurverlassenswarner ist in der EP 10 74 430 A1 beschrieben. Dabei wird auf der Basis des Bildes einer nach vorne schauenden Videokamera die Position des Fahrzeugs in der Spur bestimmt und eine Warnmeldung bei Verlassen bzw. bei drohendem Verlassen der Fahrspur ausgegeben.

In der DE 102 10 130 A1 ist ein Spurverlassenswarner beschrieben, bei welchem ein Aufmerksamkeitszustand des Fahrers, der auf der Basis von Lenk-, Brems- oder Gaspedalbewegungen ermittelt wird, bei der Warnung berücksichtigt wird. Je unaufmerksamer der Fahrer eingestuft wird, umso früher erfolgt dabei die Warnung.

Die DE 102 101 30 A1 zeigt ein Verfahren und eine Vorrichtung zur Fahrerunterstützung, bei welcher ein Warnsignal erzeugt wird, wenn ein vorgegebener Abstandswert zu einem Fahrspurrand durch das Fahrzeug unterschritten wird. Die Intensität des Warnsignals ist dabei abhängig von der Aufmerksamkeit des Fahrers, das heißt ist der Fahrer unaufmerksam, so ist das Warnsignal intensiver, als wenn der Fahrer aufmerksam ist.

Die WO 03/094130 A1 zeigt ebenfalls ein Verfahren und eine Vorrichtung zur Fahrerunterstützung, bei welcher ein Warnsignal erzeugt wird, wenn das Fahrzeug einen vorgegebenen Abstandswert zu einer Randmarkierung unterschreitet. Die Besonderheit ist, dass die normalerweise zu erwartenden Lenkkorrekturen des Fahrers, wenn er sich dem Fahrspurrand nähert, mit berücksichtigt werden. Dies bedeutet, dass als zukünftige Trajektorie des Fahrzeugs eine Trajektorie bestimmt wird, die eine derartige Lenkkorrektur mit berücksichtigt. Mit anderen Worten wird die zukünftige Bahn des Fahrzeugs unter Berücksichtigung einer solchen Korrektur berechnet und dann ein Warnsignal ausgegeben, wenn die zukünftige Trajektorie den Abstandswert unterschreitet. Bei unaufmerksamem Fahrer wird von einem geringeren Korrekturwert ausgegangen, sodass eine frühere Warnung erfolgt. Es geht somit um die Berücksichtigung eines zukünftigen Verhaltens des Fahrers.

Die DE 195 079 56 A1 beschreibt ein Verfahren und eine Vorrichtung zur Fahrerunterstützung, bei welcher ein Warnsignal erzeugt wird, wenn das Fahrzeug einen vorgegebenen Abstand zu einer Fahrbahnrandmarkierung unterschreitet.

Die DE 102 38 324 A1 beschreibt eine Vorgehensweise zur Erkennung, ob ein Fahrer aufmerksam oder unaufmerksam ist, anhand des Abstandes zur Fahrbahnrandmarkierung. Die gattungsgemäße WO 2006/037445 A1, die der Erfindung als nächstliegender Stand der Technik am nähesten kommt, betrifft ein Spurverlassenswarnsystem, welches eine Warnung abhängig von einer Abweichung des Fahrzeugs von der Fahrspurmitte auslöst, wobei die Schwellwerte der Abweichung des Fahrzeugs von der Fahrspurmitte auf Basis verschiedenster Umwelteinflüsse gewählt werden. Dies geschieht auf Basis der Verkehrssituation, des Fahrverhaltens des Fahrers, der Seite der Spurmarkierung, der das Fahrzeug nahe kommt, oder Kombinationen dieser Einflußfaktoren.

Die WO 03/076250 A1 zeigt ein Spurhaltesystem, welches versucht, ein Fahrzeug in der Spur zu halten und zwar in einem Abstand von der Spurmitte, den der Fahrer manuell einstellen kann. Weitere Einflußfaktoren (außer der Messung der Spurmitte sowie der manuell eingestellten lateralen Ablage) berücksichtigt dieses System jedoch nicht.

### Vorteile der Erfindung

Durch eine Warnstrategie, die abhängig ist von der benutzten Fahrspur und der Fahrspurseite und die fahrerindividuell ausgestaltet ist, werden Fehlwarnungen vermieden und die Akzeptanz des Spurverlassenswamers erhöht. Dies wird erreicht, indem eine Warnung bei Verlassen der Fahrspur bzw. bei drohendem Verlassen dann stattfindet, wenn das Verhalten des Fahrers deutlich vom üblichen Fahrverhalten des betreffenden Fahrers abweicht bzw. indem die Fahrsituation, insbesondere das übliche Verhaltensmuster in verschiedenen Fahrspuren einer mehrspurigen Straße, hinsichtlich seines Gefährdungspotentials berücksichtigt wird.

Dabei wird die fahrerindividuelle Abhängigkeit der Warnstrategie im Rahmen eines Lernalgorithmus an Veränderungen des Fahrverhaltens des Fahrers angepasst.

In vorteilhafter Weise wird also der Normalfahrzustand verschiedener Fahrer bei der Ausbildung der Warnstrategie berücksichtigt. Es wird berücksichtigt, dass manche Fahrer stets sauber mittig in der Spur fahren, andere dagegen beispielsweise auf der rechten Autobahnspur bewusst weit rechts fahren und Berühren der rechten Spurmarkierung bewusst in Kauf nehmen. Gleiches kann für die linke Spurmarkierung beim Fahren auf der linken Spur bei einer mehrspurigen Straße mit getrennten Fahrtrichtungen (z.B. Autobahn oder autobahnähnlicher Ausbau) gelten. Auch hier wird von manchen Fahrern teilweise sogar ein Überschreiten der Randstreifen um einige wenige Zentimeter bewusst in Kauf genommen. Analoges Verhalten kann beim Fahren auf mittleren Spuren beobachtet werden, wobei hier bereits ein Berühren der Spurmarkierung nicht mehr toleriert werden kann, so dass dann zwingend eine Warnung ausgesprochen werden muss. Solche fahrsituationsabhängigen und/oder fahrerindividuellen Situationen werden durch die nachfolgend beschriebene Vorgehensweise bei der Ausbildung der Warnstrategie berücksichtigt und somit eine optimale Anpassung der Warnstrategie an den Fahrer bzw. die Fahrsituation erreicht.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt dabei ein Übersichtsbild für eine Verarbeitungseinheit, durch welche ein Spurverlassenswarner realisiert wird. In Figur 2 ist anhand eines Flussdiagramms eine Ausführung zur Ausbildung einer Warnstrategie in Abhängigkeit der Fahrsituation, insbesondere der benutzten Fahrspur, und des Fahrerverhaltens skizziert, während in Figur 3 anhand eines Flussdiagramms ein Realisierungsbeispiel für einen Lernalgorithmus zur Ermittlung einer fahrerindividuellen Ausbildung der Warnstrategie des Spurverlassenswamers skizziert ist.

### Beschreibung von Ausführungsbeispielen

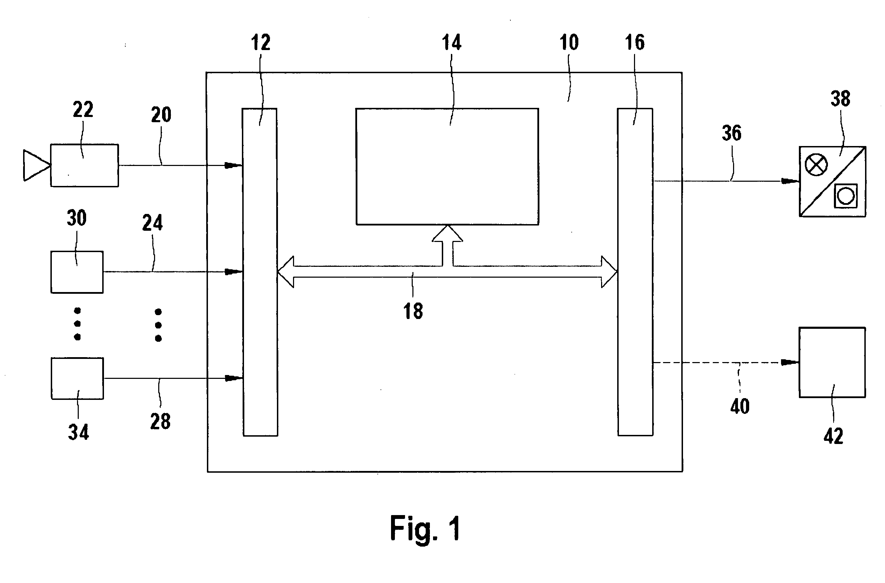

Figur 1 zeigt eine Vorrichtung, welche Teil eines Systems zur Fahrerunterstützung ist (z.B. zur Warnung und/oder zum Ansteuern eines Stellelements zur Querführung des Fahrzeugs bei Verlassen oder drohendem Verlassen der Fahrspur). Dargestellt ist eine Steuer- bzw. Auswerteeinheit 10, welche wenigstens eine Eingangsschaltung 12, einen Mikrocomputer 14 und eine Ausgangsschaltung 16 aufweist. Diese Elemente sind mit einem Bussystem 18 zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22 (Mono- oder Stereo-Kamera), welches die Szene vor dem Fahrzeug aufnimmt. Entsprechende Bilddaten werden über die Eingangsleitung 20 übermittelt. Ferner sind Eingangsleitungen 24 bis 26 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels und/oder der Gierrate, zur Erfassung einer Größe, welche einen Beschleunigungswunsch des Fahrers repräsentiert, beispielsweise das Ausmaß der Fahrpedalbetätigung durch den Fahrer, zur Erfassung der Geschwindigkeit und/oder der Beschleunigung des Fahrzeugs sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und Ausgangsleitung 36 wird wenigstens eine Warneinrichtung 38 angesteuert, beispielsweise eine Warnlampe und/oder ein Lautsprecher für eine akustische Warnung und/oder für eine Sprachausgabe und/oder ein Display für die Anzeige eines Bildes und/oder ein Stellelement für eine haptische Anzeige, mit deren Hilfe der Fahrer über das (drohende) Verlassen der Fahrspur informiert wird. Darüber hinaus kann vorgesehen sein, über die Ausgangsschaltung 16 und eine Ausgangsleitung 40 ein Stellsystem 42 anzusteuern, welches automatisch beispielsweise durch Eingriff in die Lenkung oder das Bremssystem des Fahrzeugs das Fahrzeug wieder in die Spur zurückführt (Querführung) und so das Verlassen der Fahrspur verhindert.

Mittels Methoden der Bildanalyse wird im Ausführungsbeispiel des Spurverlassenswamers auf der Basis der vom Bildsensorsystem zugeführten Bilddaten der Szene vor dem Fahrzeug Spurdaten ermittelt, die den Verlauf und die Größe der Fahrspur und aller Nachbarspuren repräsentieren, so dass die komplette Spursituation (Anzahl der Spuren, Trennung zum Gegenverkehr, ...) der Straße bekannt ist. So werden z.B. die Fahrspurrandmarkierungen (linker und/oder rechter Fahrspurrand) erfasst und der Verlauf des jeweiligen Fahrspurrandes beispielsweise als Polynom (Potenzfunktion dritter Ordnung) angenähert. Ferner wird der Verlauf der Fahrspur des Fahrzeugs, beispielsweise für das rechte und/oder linke Rad, aus Fahrzeuggeometriegrößen, den aktuellen und ggf. vergangenen Größen der Fahrzeuggeschwindigkeit, dem Lenkwinkel oder der Gierrate, etc. berechnet und ebenfalls als Polynom dargestellt. Aus den genannten Daten werden weitere Spurdaten berechnet, beispielsweise der laterale Abstand zwischen Spurmarkierung und Spur des Fahrzeugs (rechte Seite zum rechten Rand, linke Seite zum linken Rand), die Krümmung der Fahrspur, und/oder der Winkel zwischen Fahrspur und Spurmarkierung (rechte Fahrspur zum rechten Rand, linke Fahrspur zum linken Rand) anhand von Tangentenvergleichen. Daraus kann auch die erwartete Zeit bis zum Kreuzen der Linien (time to line corssing) errechnet. Die Warnung erfolgt im bevorzugtem Ausführungsbeispiel bei Überschreiten eines vorgegebenen lateralen Abstands oder bei Unterschreiten eines vorgegebenen Zeitwertes.

Ein erster Aspekt ist, dass die Warnstrategie eines Spurverlassenswamers abhängig ist von der Fahrspur, auf welcher sich das Fahrzeug befindet. Die Warnstrategie berücksichtigt also, auf welcher Spur einer Straße mit mehreren Fahrspuren in einer Fahrrichtung, z.B. Autobahnen, sich das Fahrzeug befindet. Dies wird mittels der videobasierten Spurdetektion ermittelt, die die Position des Fahrzeugs in einer von mehreren erkannten Spuren ableitet. Dabei wird zwischen Randspuren (links und rechts) und Mittelspuren unterschieden. Außerdem wird jeweils zwischen linkem und rechtem Fahrspurrand unterschieden. Auf diese Weise wird für jede Fahrspur bzw. für jeden Fahrspurrand ein maximal zulässiges Abstandsmaß Xmax bezogen z.B. auf die Innenseite der Spurmarkierung als Warnschwelle zum Erkennen eines Überschreitens des entsprechenden Spurrandes vorgegeben. Das zulässige Abstandsmaß kann also für jede Fahrspur und gegebenenfalls für jede Seite einer Fahrspur unterschiedlich gewählt werden, d.h. einen unterschiedlichen Wert annehmen. Je nach Ausführung können die Abstandsmaße auch ganz oder teilweise den gleichen Wert aufweisen.

Beim Fahren auf einer Landstraße oder einer anderen einspurigen Straße wird ebenfalls zwischen linker und rechter Spurmarkierung unterschieden. Somit ist ein zweiter Aspekt der Erfindung, ergänzend zur fahrspurspezifischen Warnstrategie, eine Warnstrategie, die linken und rechten Spurrand voneinander unterscheidet und für jeden Spurrand unterschiedlich wählbare Abstandswerte vorgibt.
Das ermittelte Abstandsmaß (Warnschwelle) wird dabei abhängig vom Gefährdungspotential vorgegeben. Für den rechten Rand der rechten Spur wird ein erster Wert (lateraler Abstand zur Spurrandmarkierung) vorgegeben, beispielsweise 40 cm, für den linken Rand der linken Spur ein anderer Wert, z.B. 30 cm, während für die mittleren Spuren 0 cm oder sogar negative Werte (d.h. Warnort liegt noch innerhalb der Spur) vorgegeben werden können. Alternativ zu dem geometrischen Abstandsmaßen als Warnschwelle können maximale zeitliche Schwellenwerte vor Verlassen der Spur (Tmax) vorgegeben werden (Time to line crossing). Im Nachfolgenden wird unter Abstandsmaß in Verbindung mit der Warnschwelle des Spurverlassenwamers sowohl das geometrische Abstandsmaß (lateraler Abstand des Fahrzeugs zur Fahrspur) als auch das zeitliche Abstandsmaß verstanden.

Erfindungsgemäßergibt sich als ein weiterer Vorteil , dass die Warnstrategie fahrerindividuell angepasst wird, das heißt in Abhängigkeit des Fahrerverhaltens bzw. des Fahrstils des Fahrers vorgegeben wird. Die oben erwähnten maximalen Abstandswerte werden nur dann ausgenutzt, wenn der Fahrstil des Fahrers darauf schließen lässt, dass er diese bewusst niedrig gesetzten Schwellenwerte nutzt. Bei Fahrern, die sehr diszipliniert mittig in der Spur fahren, ist es angemessen, diese Schwellenwerte gegen 0 zu reduzieren, gegebenenfalls sogar negative Werte vorzugeben. Daher wird für jeden Fahrer individuell, vorzugsweise für jede Spur und vorzugsweise für jeden Randstreifen, ein individueller Wert Xmax_individuell bestimmt. Dieser Wert kann auf der Basis eines selbstlernenden Algorithmus gewonnen werden.

Hierfür wird die folgende Lernstrategie verwendet. Gelernt wird nur, wenn der Fahrer als aufmerksam eingestuft wird. Hierzu werden die oben angegebenen Kriterien zur Einstufung des Fahrers in aufmerksam und unaufmerksam verwendet. Je nach Ausführung werden auch andere Parameter, beispielsweise eine Beobachtung des Fahrers (Lidschlagverhalten, Kopfposition, etc.) genutzt. Während der Lernphase wird beobachtet, wie der Fahrer in der Spur fährt. Im einfachsten Fall besteht die Lernstrategie darin, dass der Maximalwert, um den eine Spur überschritten wird, als individuelles Abstandsmaß gespeichert wird. Dies aber nur, falls der vorgegebene Maximalwert Xmax nicht überschritten wird. Der individuelle Abstandswert wird in vorteilhafter Weise nach einer vorgegebenen Heilzeit schrittweise reduziert, so dass sich einmalige ungewollte Ausrutscher nicht beliebig lange auswirken.

Eine Alternative zum geschilderten Lernalgorithmus ist, die Standardabweichung des aktuellen Messwertes von der Spurmitte zu berechnen und in Abhängigkeit dieser Standardabweichung den individuellen Abstandsmaßwert zu berechnen, beispielsweise indem eine mittlere Standardabweichung über eine gewissen Zeitperiode ermittelt wird, und in Abhängigkeit von diesem Mittelwert der individuelle Abstandsmaßwert bestimmt wird. Eine Warnung des Fahrers erfolgt bei Überschreiten des aktuell gültigen individuellen Abstandsmaßwertes.

Der geschilderte Lernzyklus beginnt im einfachsten Fall bei Beginn der Aktivierung des Spurverlassenswarners und endet bei ihrer Deaktivierung. Alternativ kann der Lernzyklus auf den gesamten Fahrzyklus eines Fahrers verlängert werden. In diesem Fall wird der Lernzyklus aktiviert beim Einsteigen (Erkennen der Öffnung der Fahrertür, oder Belegung des Fahrersitzes, etc.) und endet beim Aussteigen. Eine Fahrersitzbelegungserkennung stellt sicher, dass innerhalb des Fahrzyklus der Fahrer nicht wechselt.

Im Rahmen der Erfindung wird bei der Bestimmung des individuellen Abstandsmaßwertes ergänzend der aktuelle Fahrspurverlauf herangezogen, so dass die Breite der Spuren und/oder ihre Krümmungen mitberücksichtigt werden. Dies bedeutet, dass der individuelle Abstandsmaßwert ausgehend von dem gelernten Wert oder ausgehend von einem auf andere Weise vorgegebenen fahrerindividuellen Wert bei breiten Spuren reduziert wird. Dies bedeutet, dass der Wert in Richtung geringeren. Abständen zum Rand verändert wird. Bei schmalen Spuren oder bei Krümmungen wird der Wert im kurveninneren Rand verringert, beim kurvenäußeren Rand vergrößert.

Weiterhin ist es denkbar, zur Reduktion des fahrerindividuellen Werts die aktuelle Fahrzeuggeschwindigkeit heranzuziehen. Bei höheren Geschwindigkeiten ist in der Regel eine höhere Spurtreue erforderlich. Dies bedeutet, dass der Warnalgorithmus bei höheren Geschwindigkeiten der Spurtreue des Fahrers engere Grenzen setzt als bei niedrigen. Mit anderen Worten wird der individuelle Wert bei höheren Geschwindigkeiten erhöht, so dass die Warnung frühzeitiger erfolgt als bei niedrigeren Geschwindigkeiten. Dies bedeutet wiederum, dass ein stärker ermüdeter Fahrer mit nicht mehr ganz sauberer Fahrweise durch häufigere Warnungen zu niedrigeren Geschwindigkeiten bewegt wird.

Weiterhin ist es denkbar, das Lernverhalten des individuellen Werts mit der Dauer der Fahrt zu verändem. So findet am Anfang der Fahrt eine stärkere Veränderung des individuellen Wertes statt im Vergleich zur Veränderung nach mehrstündiger Fahrt. Dies berücksichtigt, dass ein Training der Parameter bevorzugt noch bei ausgeruhtem Fahrer stattfinden sollte, während ein nachlassender Fahrstil nicht zu einer Verbesserung der Warnparameter führen sollte. Eine stärkere Veränderung des Wertes in diesem Sinne bedeutet, dass die Änderungsgeschwindigkeit des Wertes größer ist.

Ferner kann zwischen gestrichelten und durchgezogenen Spurlinien unterschieder werden. Dies bedeutet, dass der Abstandswert nicht nur abhängig von der Spur und/oder der Fahrspurseite, sondern ergänzend oder alternativ auch abhängig von der Art der Spurlinie ausgewählt wird. Insbesondere kann vorgesehen sein, dass der Abstandswert so gewählt wird, dass bei gestrichelten Linien später eine Warnung erfolgt als bei durchgezogenen Spurlinien.

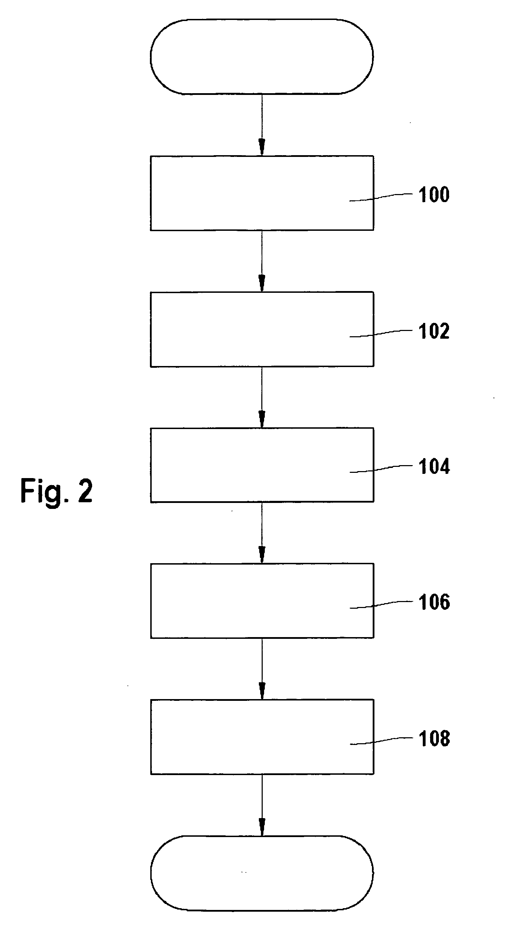

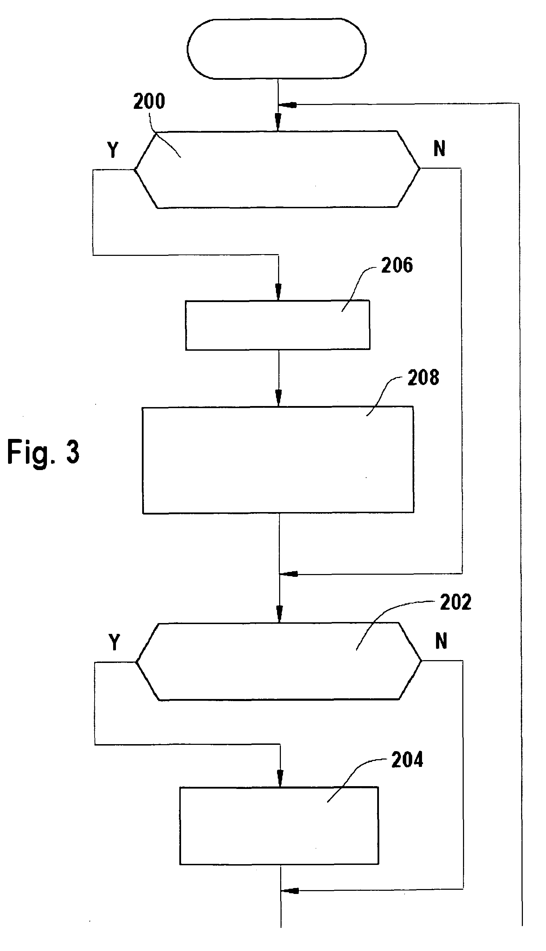

Die Realisierung der oben genannten Vorgehensweise erfolgt im Rahmen eines Programms des Mikrocomputers der Verarbeitungseinheit. Beispiele für solche Programme sind anhand der Flussdiagramme der Figuren 2 und 3 dargestellt. Die skizzierten Programme werden in vorgegebenen Zeitintervallen durchlaufen.

In Figur 2 ist ein Flussdiagramm skizziert, welches die Vorgabe von Abstandswerten (geometrische oder zeitliche) für Fahrspuren und/oder Fahrbahnseiten und/oder fahrerindividuell zeigt.

Das skizzierte Programm wird beim aktivem Spurverlassenswarner zyklisch durchlaufen. Im ersten Schritt 100 wird festgestellt, auf welcher Spur das Fahrzeug sich befindet. Dies erfolgt anhand einer Analyse des von einer Videokamera aufgenommenen Bildes vor dem Fahrzeug, gegebenenfalls unter Berücksichtigung von Navigationsdaten. Bei einer mehrspurigen Fahrbahn (diese Information kann aus dem Bild der Kamera oder aus Daten eines Navigationssystems abgeleitet werden) wird festgestellt, in welcher Spur das Fahrzeug sich befindet (links, Mittenspur, rechts, etc.). Im darauffolgenden Schritt 102 wird in Abhängigkeit des Ergebnisses im Schritt 100 die Abstandsmaße Xmax vorgegeben. Dazu ist im bevorzugten Ausführungsbeispiel eine Tabelle vorgesehen, in welcher abhängig von der Fahrspur und gegebenenfalls dem zu betrachtenden Fahrbahnrand Werte vorgegeben sind. Bei einer mehrspurigen Straße (in einer Fahrrichtung) werden somit für jede Spur und gegebenenfalls für jeden Fahrbahnrand Werte vorgehalten. Bei einer einspurigen Straße (in einer Fahrrichtung) wird ein Wert für den linken und ein Wert für den rechten Rand vorgegeben. Darüber hinaus kann in einem oder in beiden Fällen ergänzend noch die Art der Randmarkierung berücksichtigt werden, indem zusätzlich für gestrichelte Linien und für durchgezogene Linien unterschiedliche Werte vorgegeben sind. Abhängig von der im Schritt 100 ermittelten Fahrsituation werden also im Schritt 102 die entsprechenden Grenzwerte für die aktuelle Spur des Fahrzeugs, Xmaxlinks, Xmaxrechts, ausgewählt. Daraufhin wird im Schritt 104 der gegebenenfalls für die aktuelle Fahrspur geltende fahrerindividuelle Abstandswert, der ebenfalls für die beiden Fahrspurseiten unterschiedlich sein kann, eingelesen (Xmax_individuell_links, rechts). Im darauffolgenden Schritt 106 wird dann der für die jeweilige Fahrspurseite relevante Wert auf der Basis der im Schritt 102 ermittelten bzw. der in Schritt 104 eingelesenen Werte festgelegt. Im bevorzugten Ausführungsbeispiel wird der jeweils kleinere der genannten Werte für jede Fahrbahnseite ausgewählt. Diese Werte werden dann gemäß Schritt 108 dem Warnalgorithmus zugeführt, der dann in der eingangs genannten Art und Weise den Fahrer warnt, wenn ein Verlassen der Fahrspur droht oder erfolgt ist.

Es ist festzustellen, dass x_max von der Spurlinie nach innen gerichtet positiv ist. Dies bedeutet, dass sich die Warngrenze in Richtung Spurlinie verschiebt, wenn sie verkleinert wird.

Figur 3 zeigt ein Flussdiagramm, welches eine bevorzugte Ausführung des Lernalgorithmus für den fahrerindividuellen Wert skizziert. Auch das hier skizzierte Programm wird zyklisch durchlaufen.

Mit Aktivierung des Spurverlassenswamers oder mit Beginn des Fahrzyklus eines Fahrers (Sitzbelegungserkennung, etc.) wird das in Figur 3 skizzierte Programm gestartet. Dabei wird ein Zähler aktiviert und für die individuellen Abstandmaßwerte ein Startwert vorgegeben. Im ersten Schritt 200 wird überprüft, ob der Fahrer als aufmerksam einzustufen ist. Dies erfolgt auf der Basis der eingangs genannten Größen, die derart ausgewertet werden, dass eine Klassifikation des Fahrers in "aufmerksam" und "nicht aufmerksam" vorgenommen werden kann. Ist der Fahrer als unaufmerksam einklassifiziert worden, so wird im Schritt 202 überprüft, ob ein Zähler abgelaufen ist. Ist dies nicht der Fall, wird das Programm wiederholt. Im anderen Fall werden in Schritt 204 die individuellen Abstandsmaßwerte inkrementiert (so dass die Warnung frühzeitiger erfolgt), der Zähler auf 0 gesetzt und erneut gestartet.

Nach Schritt 204 wird das Programm mit Schritt 200 und der Überprüfung, inwieweit der Fahrer aufmerksam ist oder nicht, fortgefahren. Ist der Fahrer aufmerksam, so wird im Schritt 206 für die linke und rechte Seite der Fahrspur der aktuell gemessene Abstandsmaßwert (geometrisch oder zeitlich) eingelesen. Der Abstandsmaßwert wird wie vorstehend geschildert anhand des Verlauf der Randmarkierungen und der aktuellen Kurs des Fahrzeugs ermittelt. Daraufhin wird im Schritt 208 der gespeicherte Abstandswert gegebenenfalls verändert, vorzugsweise indem der Minimalwert (oder ein gewichteter Mittelwert) aus dem aktuell gemessenen und dem gespeicherten Wert gebildet wird. Somit liegt im Schritt 208 für die aktuelle Fahrspur für den linken und rechten Rand ein individueller Abstandswert vor, der gegebenenfalls korrigiert bzw. weiterverarbeitet (Kurvenfahrt, Geschwindigkeit, Fahrspurbreite, etc.) und angepasst dem Spurverlassenswarner gemäß Figur 2 zur Verfügung gestellt wird.

Nach Schritt 208 wird der Zähler überprüft (Schritt 202), der bei Ablauf einer vorbestimmten Zeitperiode zu einer Inkrementierung (Schritt 204) des gespeicherten individuellen Abstandswertes links und rechts führt. Damit werden wirksam Ausreißer im Fahrverhalten des Fahrers korrigiert, und vermieden, dass derartige Ausreißer einen nachhaltigen Einfluss auf die Funktionalität des Spurverlassenswarners haben.

## Patentansprüche

1. Verfahren zur Fahrerunterstützung, wobei ein Warnsignal erzeugt wird, wenn das Fahrzeug die aktuelle Fahrspur verläßt beziehungsweise zu verlassen droht, wobei die Fahrzeugspur sowie Fahrspurdaten, die den Verlauf und die Größe der von dem Fahrzeug benutzten Fahrspur und aller Nachbarspuren repräsentieren, ermittelt werden und laterale Abstandsmaßwerte zwischen Fahrspurrändern der Fahrspur und der Fahrzeugspur bestimmt werden, und wobei für jeden Fahrspurrand ein zulässiges Abstandsmaß (Xmax) bezogen auf die Innenseite einer Spurmarkierung der Fahrspur vorgegeben wird, bei dessen Überschreiten das Warnsignal erzeugt wird, und wobei Grenzwerte (Xmax_links, Xmax_rechts) abhängig von der Fahrspur, die das Fahrzeug benutzt, aus einer Tabelle ausgewählt werden, wobei zwischen Randspuren und Mittelspuren unterschieden wird, ein für die von dem Fahrzeug benutzte Fahrspur geltender fahrerindividueller Abstandswert (Xmax_individuell_links, Xmax_individuell_rechts) eingelesen wird, **dadurch gekennzeichnet, dass** der kleinere Wert aus Grenzwerten und Abstandswert als zulässiges Abstandsmaß verwendet wird, wobei der fahrerindividuelle Abstandswert bestimmt wird, indem überprüft wird, ob der Fahrer des Fahrzeugs aufmerksam ist, und bei aufmerksamem Fahrer der gespeicherte fahrerindividuelle Abstandswert verändert wird, indem aus ihm und dem momentanen Abstandswert der Minimalwert oder ein gewichteter Mittelwert gebildet wird.

2. Verfahren nach Anspruch 1, **dadurch gekennzeichnet, dass** der Abstandswert abhängig vom Gefährdungspotential vorgegeben ist.

3. Verfahren nach einem der vorhergehenden Ansprüche, **dadurch gekennzeichnet, dass** der Abstandswert abhängig von der Geschwindigkeit des Fahrzeugs ist.

4. Verfahren nach einem der vorhergehenden Ansprüche, **dadurch gekennzeichnet, dass** der fahrerindividuelle Abstandswert abhängig von der Geschwindigkeit des Fahrzeugs und/oder einer Dauer der Fahrt ist.

## Claims

1. Method for providing driver assistance, wherein a warning signal is generated if the vehicle leaves or threatens to leave the current lane, wherein the vehicle lane and lane data which represent the profile and the magnitude of the lane and all the adjacent lanes used by the vehicle are determined, and lateral distance measure values are determined between the edges of the lane and the vehicle lane, and wherein a permissible distance measure (Xmax) relating to the inside of a lane marking of the lane is predefined for each lane edge, at the crossing of which lane marking the warning signal is generated, and wherein limiting values (Xmax_left, Xmax_right) are selected from a table as a function of the lane which the vehicle uses, wherein a differentiation is made between edge lanes and centre lanes, a driver-specific distance value (Xmax_specific_left, Xmax_specific_right) which applies to the lane used by the vehicle is read in, **characterized in that** the relatively small value from the limiting values and a distance value are used as a permissible distance measure, wherein the driver-specific distance value is determined by checking whether the driver of the vehicle is attentive, and in the case of an attentive driver the stored driver-specific distance value is changed by forming the minimum value or a weighted mean value from said stored, driver-specific distance value and the instantaneous distance value.

2. Method according to Claim 1, **characterized in that** the distance value is predefined as a function of the hazard potential.

3. Method according to one of the preceding claims, **characterized in that** the distance value is dependent on the speed of the vehicle.

4. Method according to one of the preceding claims, **characterized in that** the driver-specific distance value is dependent on the speed of the vehicle and/or a duration of travel.

## Revendications

1. Procédé d'assistance au conducteur dans lequel un signal d'avertissement est formé lorsque le conducteur quitte la bande de circulation en cours ou menace de la quitter,
la bande de circulation ainsi que des données de bande de circulation qui représentent l'évolution et la taille de la bande de circulation utilisée par le véhicule ainsi que de toutes les bandes de circulation voisines étant déterminées et des valeurs de mesure de l'écart latéral entre les bords de la bande de circulation et la bande de circulation du véhicule étant déterminées,
une valeur admissible d'écart (Xmax) étant prédéterminée pour chaque bord de la bande de circulation par rapport au côté intérieur d'un marquage de la bande de circulation,
le signal d'avertissement étant formé lorsque cette distance est dépassée,
des valeurs limite (Xmax_links, Xmax_rechts) qui dépendent de la bande de circulation qu'utilise le véhicule étant sélectionnées dans un tableau avec une distinction entre les bandes de bordure et les bandes centrales,
une valeur de distance individuelle pour chaque conducteur et valide pour la bande de circulation utilisée par le véhicule (Xmax_individuell_links, Xmax_individuell_rechts) étant lue,
**caractérisé en ce que**
la plus petite valeur entre les valeurs limite et la valeur de distance est utilisée comme mesure de distance admissible,
la valeur de distance individuelle au conducteur étant déterminée en vérifiant si le conducteur du véhicule est attentif,
la valeur de distance individuelle au conducteur et conservée en mémoire étant modifiée lorsque le conducteur est attentif en formant à partir d'elle et de la valeur de distance instantanée la valeur minimale ou une valeur moyenne pondérée.

2. Procédé selon la revendication 1, **caractérisé en ce que** la valeur de distance est prédéterminée en fonction du potentiel de danger.

3. Procédé selon l'une des revendications précédentes, **caractérisé en ce que** la valeur de distance dépend de la vitesse du véhicule.

4. Procédé selon l'une des revendications précédentes, **caractérisé en ce que** la valeur de distance individuelle au conducteur dépend de la vitesse du véhicule et/ou de la durée du déplacement.
